# EUROPEAN PATENT SPECIFICATION

(11) **EP 0 664 856 B1**
(45) Date of publication and mention of the grant of the patent: **17.04.1996**
(21) Application number: 92922722.1
(22) Date of filing: 16.10.1992
(51) Int. Cl.: F04D 25/04, B64D 13/08

(54) **FOUR WHEEL AIR CYCLE MACHINE**
LUFTKREISLAUFMASCHINE MIT VIER RÄDER
MACHINE A CYCLE D'AIR A QUATRE ROUES

(43) Date of publication of application: 02.08.1995
(73) Proprietor: UNITED TECHNOLOGIES CORPORATION, Hartford, CT 06101 (US)
(72) Inventor: MAHER, John, F., Jr., Enfield, CT 06082 (US); MERRITT, Brent, J., Westfield, MA 01085 (US); MCAULIFFE, Christopher, Windsor, CT 06095 (US); DZIORNY, Paul, J., Manchester, CT 06040 (US)
(74) Representative: Weydert, Robert
(86) International application number: US9208884
(87) International publication number: WO9409276

(56) References cited:
- WO-A-92/03338
- FR-A- 2 241 703
- US-A- 3 182 897
- US-A- 4 312 191
- US-A- 4 374 469

## Description

### Technical Field

The present invention relates generally to air conditioning systems of the type utilized on environmental control systems to cool and dehumidify air for supply to an aircraft cabin or the like and, more particularly, to an air cycle machine having four wheels mounted on a common drive shaft.

### Background Art

Conventional aircraft environmental control systems incorporate an air cycle machine, also referred to as an air cycle cooling machine, for use in cooling and dehumidifying air for supply to the aircraft cabin for occupant comfort. Typically, such air cycle machines are three wheel machines comprised of a compressor, a turbine, and a fan disposed at axially spaced intervals along a common shaft, the turbine driving both the compressor and the fan. The three wheels are supported for rotation about the axis of the shaft on one or more bearing assemblies disposed about the drive shaft, such as a pair of spaced bearing assemblies, one bearing assembly disposed intermediate each pair of adjacent spaced wheels. Although the bearing assemblies may be ball bearings or the like, hydrodynamic film bearings, such as gas film foil bearings, are often utilized on state-of-the-art air cycle machines. For example, three wheel air cycle machines are disclosed in US-A-3,428,242, US-A-4,507,939 and US-A-5,113,670.

The three wheel air cycle machine disclosed in US-A-3,428,242 comprises a fan, a compressor and a cooling turbine mounted to a common shaft driven by the turbine, with the fan being disposed at one end of the shaft and the turbine and compressor being disposed in back to back relationship at the other end of the shaft with the turbine inboard of the compressor. The shaft is rotatively supported on a ball bearing assembly disposed intermediate the fan and the turbine and cooled by turbine outlet air.

In US-A-4,507,939, a three wheel air cycle machine is disclosed which includes a fan, a compressor and a turbine mounted to a common shaft driven by the turbine with the fan being disposed between the compressor and the turbine which are mounted to the opposite ends of the shaft. Rotational support for the shaft is provided by a pair of gas film bearings, one disposed about the shaft intermediate the fan and the compressor and the other disposed about the shaft intermediate the fan and the turbine. Both gas film bearings are cooled and pressurized with compressed air passed from the inlet to the cooling turbine through the bearing and thence discharged into the fan inlet or outlet ducts.

The three wheel air cycle machine disclosed in US-A-5,113,670 also incorporates a fan, a compressor and turbine mounted to a common shaft driven by the turbine and supported on a pair of hydrodynamic film foil bearings. In this air cycle machine, the compressor is centrally disposed on the shaft with the fan and the turbine disposed at opposite ends of the shaft thereby providing for axial discharge of the fan exhaust and the turbine exhaust. One of the hydrodynamic film foil bearings supporting the shaft is disposed between the compressor and the turbine and the other between the compressor and the fan. A bearing cooling circuit is provided whereby compressed air from the turbine inlet duct is passed first through one bearing and thence the other bearing, to both cool and pressurize the hydrodynamic film foil bearings, and thereafter discharged into the compressor inlet duct.

On aircraft powered by turbine engines, the air to be conditioned in the air cycle machine is typically compressed air bled from one or more of the compressor stages of the turbine engine. In conventional systems, this bleed air is passed through the air cycle machine compressor wherein it is further compressed, thence passed through a condensing heat exchanger to cool the compressed air sufficiently to condense moisture therefrom thereby dehumidifying the air before expanding the dehumidified compressed air in the turbine of the air cycle machine to both extract energy from the compressed air so as to drive the shaft and also to cool the expanded turbine exhaust air for use as the cooling fluid in the aforementioned condensing heat exchanger before it is supplied to the cabin as conditioned cooling air. The compressed bleed air being supplied to the compressor of the air cycle machine is typically precooled by passing it through a precooling heat exchanger in heat exchange relationship with ambient air drawn through the precooling heat exchanger by the fan of the air cycle machine.

Although conventional three wheel air cycle machines are satisfactory for use in such conventional environmental control systems, such three wheel air cycle machines are not suitable for use in the improved aircraft environmental control system disclosed in US-A-5,086,622 wherein the expanded and cooled turbine exhaust air which has passed as the cooling fluid in heat exchange relationship with the compressed air passing through the condensing heat exchanger is, after discharge from the cooling fluid path of the condensing heat exchanger, expanded in a second turbine to cool the expanded air to a desired temperature for supply to the cabin as conditioned cooling air and to extract further energy therefrom. To be suitable for use in this improved aircraft air conditioning system, an air cycle machine must have four wheels, i.e. two turbines, a compressor and a fan.

Reference is also made to FR-A-2 241 703 which discloses a four wheel machine for a chemical treatment equipment. The four wheels are mounted on a shaft supported in two bearings and the two central wheels are mounted in back-to-back relationship on opposite sides of a central disc member received therebetween.

An air cycle machine having four wheels is disclosed in WO-A-92/3338 on which the two-part form of independent claim 1 is based.

### Disclosure of Invention

It is an object of the present invention to provide a compact four wheel air cycle machine.

In accordance with the invention there is provided an air cycle machine for conditioning air for supply to an enclosure, comprising: a. shaft means disposed for rotation about a longitudinally extending axis; b. bearing means for supporting said shaft means for rotation about the axis; c. a first wheel mounted to a first end portion of said shaft means for rotation therewith; d. a second wheel mounted to a second end portion of said shaft means for rotation therewith; e. a third wheel mounted to a central portion of said shaft means in spaced relationship from said first wheel and from said second wheel for rotation with said shaft means; and f. a fourth wheel mounted to a central portion of said shaft means between said second wheel and said third wheel for rotation with said shaft means, one of said centrally disposed third and fourth wheels comprising a compressor rotor operative to compress the conditioning air passing therethrough and the other of said centrally disposed third and fourth wheels comprising a turbine rotor operative to expand the conditioning air passing therethrough thereby cooling the expanded conditioning air and extracting energy therefrom for driving said shaft means in rotation about the axis, characterized in that said third and fourth wheels are mounted in back-to-back relationship on opposite sides of a central disc between them, said central disc being made of thermal insulating material, and that the bearing means comprises only two journal bearings, namely: a. first journal bearing means for supporting said shaft means for rotation about the axis, said first bearing means being disposed between said first wheel and said third wheel; and b. second journal bearing means for supporting said shaft means for rotation about the axis, said second bearing means disposed about said second wheel and said fourth wheel.

Advantageously, one of the centrally disposed third and fourth wheels is operative to extract energy from the flow of compressed air for driving the shaft means. In one embodiment of the air cycle machine of the present invention particularly suited for use in cooling and humidifying air for supply to an aircraft cabin, the fourth wheel comprises a first stage turbine rotor, the third wheel comprises a compressor rotor, the outboard second wheel comprises a fan rotor, and the outboard first wheel comprises a second stage turbine rotor. The shaft means advantageously comprises a first hollow end shaft member having the second stage turbine rotor mounted to its outboard end and the first stage turbine rotor mounted to its inboard end, a second hollow end shaft member having the compressor rotor mounted to its inboard end and the fan rotor mounted to its outboard end, and an annular central stub shaft member disposed intermediate the first and second end shaft members having the first stage turbine rotor mounted to one end thereof and the compressor rotor mounted to the other end thereof, all disposed coaxially about an elongated tie rod extending along the longitudinal axis of rotation and mounted at one end to the second stage turbine rotor and at its other end to the fan rotor thereby linking the shaft members and the rotors together for rotation about the common axis. The first and second bearing means advantageously comprise hydrodynamic film foil bearings which are disposed, respectively, about the first and second end shaft members, and are cooled and pressurized by air bled from the flow of pressurized conditioning air being supplied to the second stage turbine for expansion therein.

The air cycle machine of the present invention also includes a housing surrounding the four wheels and the shaft means and provides appropriate inlet and outlet ducts for ducting air flow to and from the four wheels, as well as providing support for the bearings. Advantageously, the housing comprises three axial sections, a first end section providing the inlet and outlet ducts for the compressor and the fan, as well as supporting the hydrodynamic bearing disposed about the end shaft member extending therebetween, a central section providing the inlet and outlet ducts for the first stage turbine, as well as supporting the hydrodynamic bearing disposed about the end shaft member extending between the first stage turbine and the second stage turbine, and a second end section providing the inlet and outlet ducts for the second stage turbine.

### Brief Description of Drawing

These and other features and advantages of the present invention will become more apparent in light of the detailed description of the embodiments thereof illustrated in the accompanying drawing, wherein:
Figure 1 is a side elevational view, partly in section, of an air cycle machine of the present invention;
Figure 2 is a side elevational view, partly in section, of an embodiment of the four wheel air cycle machine of the present invention particularly suited for use in a condensing cycle aircraft cabin air cooling and temperature control system; and
Figure 3 is a perspective view of the housing of the air cycle machine of Figure 2.

### Best Mode for Carrying Out the Invention

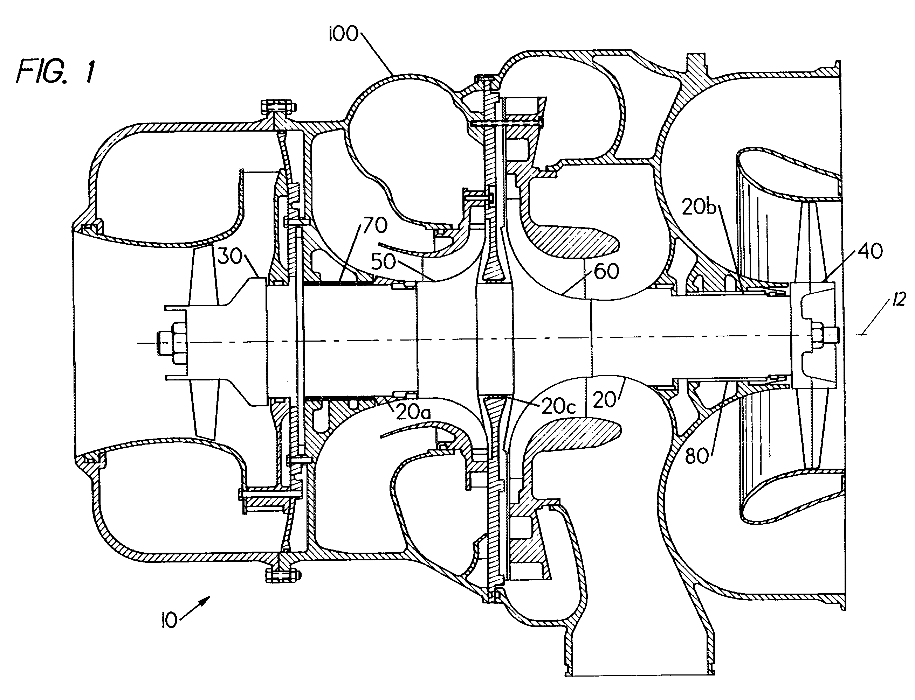

Referring now to Figure 1, there is depicted therein an air cycle machine 10 having four distinct wheels coaxially disposed along a common shaft means 20 for rotation about a common longitudinal axis 12. A first wheel 30 is mounted to a first end portion of the shaft means 20 for rotation therewith, a second wheel 40 is mounted to a second end portion of the shaft means 20 for rotation therewith, a third wheel 50 is mounted to a central portion of the shaft means 20 in spaced relationship from the first wheel 30 at one end of the shaft means 20 and the second wheel 40 at the other end of the shaft means 20 for rotation therewith, and a fourth wheel 60 is also mounted to the central portion of the shaft means 20 for rotation therewith at a location adjacent the third wheel 50 and between the second wheel 40 and the third wheel 50. The shaft means 20 is supported for rotation about the longitudinal axis 12 on a pair of spaced bearing means 70 and 80 supported in a housing 100 which serves not only to support the bearing means, but also to provide appropriate inlet ducts and outlet ducts for the supply of working fluid to and the discharge of working fluid from each of the four wheels. The first bearing means 70 is disposed about the first end portion 20a of the shaft means 20 intermediate the first wheel 30 mounted to the first end of the shaft means 20 and the third wheel 50 mounted to the central portion 20c of the shaft means 20, and the second bearing means 80 is disposed about the second end portion 20b of the shaft means 20 intermediate the second wheel 40 mounted to the second end of the shaft means 20 and the fourth wheel 60 mounted to the central portion 20c of the shaft means 20. At least one the four distinct wheels mounted to the shaft means 20 for rotation therewith is operative to extract energy from a flow of pressurized gaseous fluid, for example compressed air, for driving the shaft means 20 in rotation about the longitudinal axis 12.

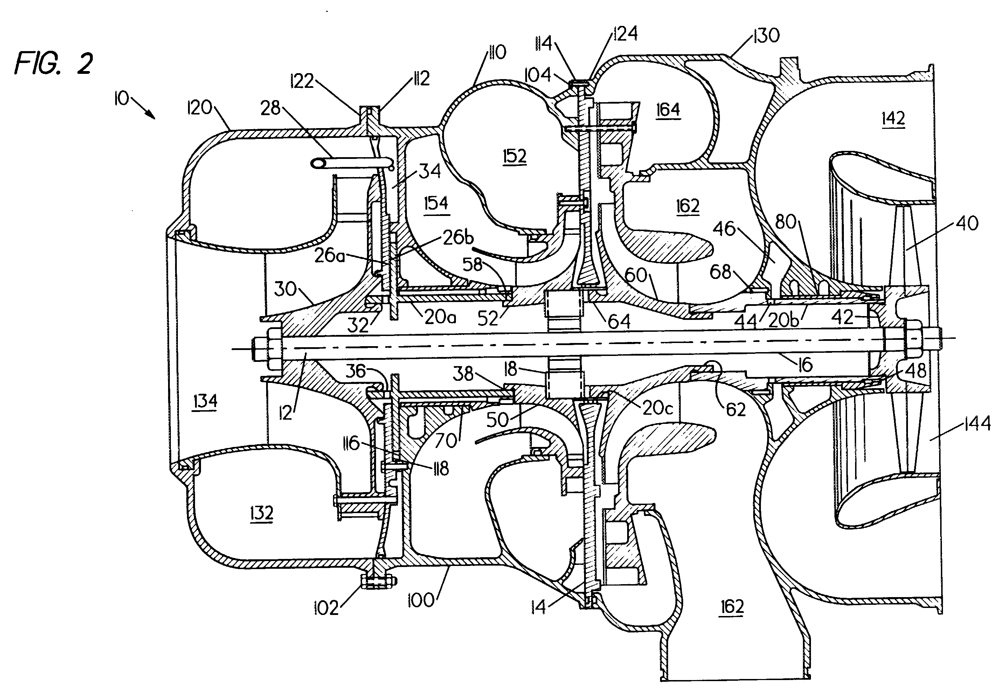

Most advantageously, one of the two wheels mounted to the central portion 20c of the shaft means 20, that is either the third wheel 50 or the fourth wheel 60, comprises a compressor rotor operative to compress a flow of gaseous working fluid and the other of the central wheels comprises a turbine rotor operative to expand the gaseous working fluid compressed via the compressor rotor thereby extracting energy therefrom so as to drive the shaft means 20 in rotation about the axis 12 and thereby power the compressor rotor. The two outer wheels, that is the first wheel 30 and the second wheel 40, may each comprise a fan rotor, as in the embodiment depicted in Figure 1, or one may comprise an additional turbine rotor and the other a fan rotor, as in the embodiment depicted in Figure 2, or one may comprise an additional turbine rotor and the other an additional compressor rotor, as desired. In fact, the four wheels of the air cycle machine of the present invention may comprise any rotor combination having at least one turbine rotor wherein the turbine rotor, or turbine rotors as the case may be, extracts sufficient energy from the gaseous working fluid expanded therein to'drive the shaft means 20, and all fan or compressor rotors mounted thereto, in rotation therewith about the axis 12.

The embodiment of the air cycle machine 10 of the present invention depicted in Figure 1, wherein the first wheel 30 and the second wheel 40 each comprise a fan rotor, the third wheel 50 comprises a turbine rotor and the fourth wheel 60 comprises a compressor rotor, is particularly suited for use in a conventional aircraft cabin environmental control system, such as the system described in commonly assigned U.S. patent Re. 32,100, a reissue of U.S. Patent 4,209,993. In the system disclosed therein, two fans are required, one fan to draw a flow of ram cooling air through a primary heat exchanger for precooling compressed bleed air being supplied to the compressor of the air cycle machine and through a secondary heat exchanger for cooling compressed air passing from the compressor to the turbine of the air cycle machine, and the other to recirculate a portion of the cabin air for mixing with the fresh expanded air discharging from the turbine for passage to the cabin as conditioned, i.e. cooled and dehumidified, air.

Heretofore, the air cycle machines customarily utilized in such a conventional aircraft environmental control system have been three wheel machines of the type having a single turbine, a single compressor and a single fan mounted typically to a common shaft driven by the turbine, with the fan rotor thereof being used to draw the ram cooling air through the primary and secondary heat exchangers. Accordingly, it has been necessary to provide a separate, independent auxiliary fan, typically electrically powered, to recirculate the cabin air. However, as the embodiment of the four wheel air cycle machine of the present invention depicted in Figure 1 includes two fan rotors 50 and 60 commonly mounted to the shaft means 20 driven by the turbine rotor 30, one of the fan rotors may be employed to recirculate the cabin air and the other fan rotor may be utilized to draw the ram cooling air through the primary and secondary heat exchangers, thereby eliminating the need for a separate auxiliary fan. Further, with the two fan rotors 20 and 30 located at the opposite ends of the shaft means 20, the outlets for discharging the air drawn through the fans may be readily disposed to direct the discharge flow axially, which typically simplifies installation and often enhances performance.

Referring now to Figure 2, the four wheel air cycle machine 10 depicted therein comprises two turbines, a compressor and a fan disposed coaxially along a common shaft means for rotation about a common longitudinal axis 12. The shaft means comprises a first end shaft member 20a, a second end shaft member 20b and a central shaft member 20c disposed coaxially along the longitudinal axis 12. Each of the shaft members 20a, 20b and 20c comprise an annular sleeve defining an open ended hollow central cavity. The end shaft members 20a and 20b are supported for rotation about the longitudinal axis 12 on bearing means 70 and 80, respectively. Each of the four wheels 30, 40, 50 and 60 has a hub portion having a plurality of rotor blades extending outwardly therefrom and a central opening extending axially therethrough to accommodate an elongated tie rod 16 extending along the longitudinal axis 12 through the central axial openings in the four wheels and through the hollow cavities of the shaft members. The tie rod 16 is bolted up at its ends to the outer wheels 30, 40 to axially clamp the four wheels and the shaft members together with sufficient axial clamping load that all four wheels and all shaft members rotate together as one integral wheel and shaft assembly.

The first end wheel 30 is mounted to the outboard end of the first end shaft member 20a and the second end wheel 40 is mounted to the outboard end of the second end shaft member 20b. The central wheel 50 is mounted to the inboard end of the first end shaft member 20a and the central wheel 60 is mounted to the second end shaft member 20b. The two central wheels 50 and 60 are additionally mounted to the central shaft member 20c for rotation therewith and disposed in back to back relationship on opposite sides of a disc 14 having a central opening circumscribing the central shaft member 20c and extending radiating outwardly therefrom. As illustrated in Figure 2, each of the wheels 30, 40, 50 and 60 is mounted to its respective end shaft member 20a, 20b by an interference fit between a piloting rim 32, 42, 52, 62, extending axially outwardly from the wheel hub, and the inner wall of the annular shaft member bounding the central cavity of the shaft member, into which cavity the rim is precisely piloted, thereby ensuring that the wheels and the shaft members rotate together about the axis 12. Alternate methods of mounting the wheels to the shaft members be may used in constructing the air cycle machine of the present invention. For example, as illustrated in Figure 2, the third wheel 50 is not mounted to the central shaft member 20c by means of a piloting rim, but rather is mounted to the central shaft member 20c through a pilot bushing 18 coaxially disposed about the axis 12. The hub of the third wheel 50 has a central piloting socket 54 sized to receive and retain by interference fit one end of the pilot bushing 18. The other end of the pilot bushing 18 is received into one end of the central cavity of the central shaft member 20c and retained therein by interference fit with the inner wall of the central shaft member 20c. The fourth wheel 60 is mounted the central shaft member 20c through a piloting rim 64 which is received into the other end of the central cavity of the central shaft member 20c and retained therein by interference fit with the inner wall thereof. The four wheels and the three shaft members to which they are so mounted are axially loaded together by the tie rod 16 extending coaxially therethrough, thereby ensuring that the four wheels and the three shaft members rotate together about the longitudinal axis 12 as a single assembly. The pilot bushing 18 also serves to center the entire wheel and shaft Assembly coaxially about the tie rod 16.

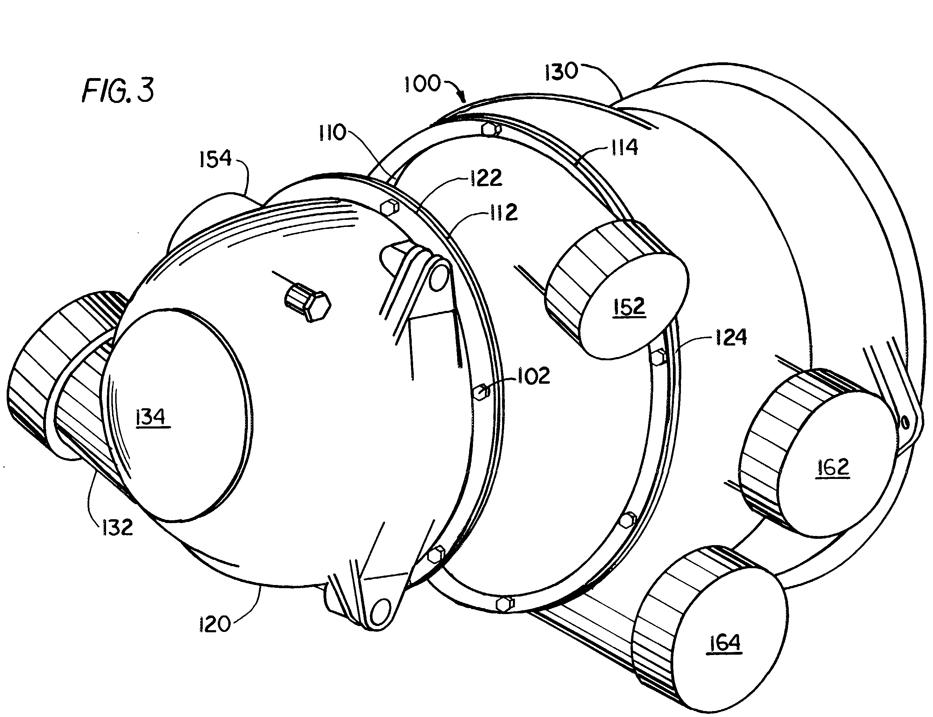

The embodiment of the air cycle machine 10 of the present invention illustrated in Figures 2 and 3 is particularly suited for use in a condensing cycle air conditioning and temperature control system for cooling and dehumidifying air for supply to an enclosure for occupant comfort, such as the condensing cycle environmental control system for supplying cooled and dehumidified air to the cabin of an aircraft as disclosed in US-A-5,086,622. In this embodiment, the central third wheel 50 comprises a first stage turbine rotor, the central fourth wheel comprises a compressor rotor, the outboard first wheel 30 comprises a second stage turbine rotor, and the outboard second wheel 40 comprises a fan rotor. The first and second stage turbine rotors 30 and 50 serve not only to expand and cool the air being conditioned, but also extract energy from the air being expanded for rotating the entire wheel and shaft assembly so to drive the fan rotor 40 and the compressor rotor 60. The wheel and shaft assembly is disposed within a housing 100 which provides individual inlet and outlet ducts for each of the rotors and also provides support for the bearing means 70 and 80. The housing 100 is comprised of two or more sections to facilitate assembly. For example, the housing 100 may advantageously be comprised of three sections: a central section 110 surrounding the turbine rotor 50 and providing a first stage turbine inlet duct 152 for supplying air to the turbine rotor 50 to be expanded therein and a first stage turbine outlet duct 154 for discharging the exhaust air expanded in the turbine rotor 50, a first end section 120 surrounding the turbine rotor 30 and providing a second stage turbine inlet duct 132 for supplying air to the turbine rotor 30 to be expanded therein and an axially directed second stage turbine outlet duct 134 for discharging the exhaust air expanded in the turbine rotor 30, and a second end section 130 surrounding both the compressor rotor 60 and the fan rotor 40 and providing an inlet duct 162 for supplying air to the compressor rotor 60 to be compressed therein, an outlet duct 164 for discharging air compressed via the compressor rotor 60, an inlet duct 142 for directing ram cooling air to the fan rotor 40 and an axially directed outlet duct 144 for discharging ram cooling air having passed through the fan rotor 40.

The central housing section 110 is mounted at one of its ends to the first end housing section 120 by a plurality of circumferentially spaced bolts 102 attaching a flange 112 of the central section 110 to a flange 122 of the end section 120, and at its other end to the second end housing section 130 by a plurality of circumferentially spaced bolts 104 passing through the central disc member 14 to attach a flange 114 of the central section 110 to a flange 124 of the end section 130. The central disc member 14, which is disposed about the central shaft member 20c and extends therefrom outwardly between the central housing section 110 and the second housing section 130 serves to separate the air flow circuit associated with the compressor rotor 60 from the air flow circuit associated with the turbine rotor 50. The central disc member 14 is made of a thermal insulating material, such as for example a low thermal conductivity plastic or composite material, to minimize undesirable heat transfer from the higher temperature compressed air passing through the compressor outlet duct 164 to the lower temperature compressed air passing through the first stage turbine inlet duct 152 to the turbine rotor 50.

In the embodiment of the air cycle machine of the present invention depicted in Figure 2, the bearing means 70 and 80 radially supporting the shaft and wheel assembly for rotation about the longitudinal axis 12 comprise hydrodynamic journal bearings, such as for example gas film foil journal bearings of the type disclosed in U.S. Patents 4,133,585; 4,247,155; and/or 4,295,689. The hydrodynamic journal bearing 70 is disposed about the first end shaft member 20a between the first wheel 30 and the third wheel 50, and the hydrodynamic journal bearing 80 is disposed about the second end shaft member 20b between the second wheel 40 and the fourth wheel 60. Each of the hydrodynamic bearings 70 and 80 comprises an inner race mounted to its respective shaft member, an outer race disposed coaxially about the inner race in radially spaced relationship therefrom and supported in the housing 100 to restrict axial or rotation displacement of the outer race, and a foil pack disposed in an annular space formed between the radially spaced inner and outer races through which pressurized air is passed to provide the appropriate hydrodynamic forces necessary for the journal bearings 70 and 80 to support the shaft and wheel assembly for rotation about longitudinal axis 12.

Additionally, a hydrodynamic thrust bearing 26 is provided for axially supporting the shaft and wheel assembly of the air cycle machine 10. The hydrodynamic thrust bearing may comprise a gas film foil thrust bearing, such as for example of the type disclosed in commonly assigned U.S. Patents 4,082,325; 4,116,503; 4,247,155 and/or 4,462,700. The bearing 26 includes an outboard bearing member 26a and an inboard bearing member 26b operatively disposed on opposite sides of a thrust disc 90 extending outwardly from the first end shaft member 20a intermediate an end wall 116 of the central housing section 110 and a bearing plate 118 disposed between the central housing section 110 and the first end section 120 inboard of the outboard first wheel 30.

In operation, relatively cool, pressurized air from the second stage turbine inlet duct 132 is passed through a flow tube 28 into an annular chamber 34 located between the bearing plate 118 and the end wall 116. A first portion of this cool pressurized air flows therefrom through the outboard thrust bearing member 26a to pressurize and cool the bearing member and thence through openings 36 in the outboard end portion of the first end shaft member 20a into the hollow interior cavity thereof. A second portion of this cool pressurized air flows from the chamber 34 through the inboard thrust bearing member 26b and thence through the first journal bearing 70 to cool and pressurize both of these hydrodynamic bearings. After traversing the first journal bearing 70, this second portion of the cool pressurized air passes through openings 38 in the inboard end portion of the first end shaft member 20a into the hollow interior cavity thereof to remix with the first portion of this flow. The recombined flow thence passes through the hollow interior of the shaft and wheel assembly to pass through openings 44 in the inboard end portion of the second end shaft member 20b to enter a chamber 46 from which this cool pressurized air passes through the second journal bearing 80, thereby cooling and pressuring the second hydrodynamic journal bearing 80, before exiting through a labyrinth seal 48 into the duct 142. Additional labyrinth seals 58 and 68 are provided to prevent the bearing cooling and pressurizing air from escaping the bearing flow circuit. Seal 58, which is disposed between the inboard end portion of the first end shaft member 20a and the inboard end of the first journal bearing 70, allows a limited flow of higher pressure, cool air from the first stage turbine outlet duct 154 to leak into the bearing flow circuit thus sealing the first journal bearing 70, and seal 68, which is disposed between the inboard end portion of the second end shaft member 20b and the surrounding housing allows a limited flow of higher pressure, relatively cool air to leak from the compressor inlet duct 162 into the chamber 46 thereby sealing the second journal bearing 80.

## Claims

1. An air cycle machine for conditioning air for supply to an enclosure, comprising:
a. shaft means (20) disposed for rotation about a longitudinally extending axis (12);
b. bearing means for supporting said shaft means (20) for rotation about the axis (12);
c. a first wheel (30) mounted to a first end portion (20a) of said shaft means (20) for rotation therewith;
d. a second wheel (40) mounted to a second end portion (20b) of said shaft means (20) for rotation therewith;
e. a third wheel (50) mounted to a central portion (20c) of said shaft means (20) in spaced relationship from said first wheel (30) and from said second wheel (40) for rotation with said shaft means (20); and
f. a fourth wheel (60) mounted to a central portion (20c) of said shaft means (20) between said second wheel (40) and said third wheel (50) for rotation with said shaft means (20), one of said centrally disposed third and fourth wheels (50, 60) comprising a compressor rotor (60) operative to compress the conditioning air passing therethrough and the other of said centrally disposed third and fourth wheels (50, 60) comprising a turbine rotor (50) operative to expand the conditioning air passing therethrough thereby cooling the expanded conditioning air and extracting energy therefrom for driving said shaft means (20) in rotation about the axis (12),
characterized in that said third and fourth wheels (50, 60) are mounted in back-to-back relationship on opposite sides of a central disc (14) between them, said central disc (14) being made of thermal insulating material and that the bearing means comprises only two journal bearings, namely:
a. first journal bearing means (70) for supporting said shaft means (20) for rotation about the axis (12), said first bearing means (70) being disposed between said first wheel (30) and said third wheel (50); and
b. second journal bearing means (80) for supporting said shaft means (20) for rotation about the axis (12), said second bearing means (80) disposed between said second wheel (40) and said fourth wheel (60).

2. An air cycle machine according to claim 1, characterized in that each of said first and second wheels (30, 40) comprises a fan rotor.

3. An air cycle machine according to claim 1, characterized in that one of said first and second wheels (30, 40) comprises a fan rotor and the other of said first and second wheels (30, 40) comprises a second turbine rotor.

4. An air cycle machine according to claim 1, characterized in that said fourth wheel (60) comprises a compressor rotor operative to compress the conditioning air passing therethrough, said third wheel (50) comprises a first stage turbine rotor operative to expand the compressed conditioning air thereby cooling the expanded conditioning air and extracting energy therefrom for driving said shaft means (20) in rotation about the axis (12), said first wheel (30) comprises a second stage turbine rotor operative to further expand the compressed conditioning air thereby further cooling the expanded conditioning air and further extracting energy therefrom for driving said shaft means (20) in rotation about the axis (12), and said second wheel (40) comprises a fan rotor.

5. An air cycle machine according to any one of claims 1 to 4, characterized by comprising a housing (100) disposed about said shaft means (20) and said first, second, third and fourth wheels (30, 40, 50, 60) mounted to said shaft means (20) and supporting the bearing means (70, 80), said housing (100) having a central section (110) circumscribing said third wheel (50) and defining an inlet duct (152) thereto and an outlet duct (154) therefrom, a first end section (120) circumscribing said first wheel (30) and defining an inlet duct (132) thereto and an outlet duct (134) therefrom, and a second end section (130) circumscribing said second and fourth wheels (40, 60) and defining an inlet duct (162) to said fourth wheel (60), an inlet duct (142) to said second wheel (40), an outlet duct (144) from said second wheel (40), and an outlet duct (164) from said fourth wheel (60), said central section (110) supporting said first journal bearing means (70) and said second end section (130) supporting said second journal bearing means (80).

6. An air cycle machine according to any one of claims 1 to 5, characterized in that said first and second end portions (20a, 20b) and said central portion (20c) of said shaft means (20) are separate shaft portions axially spaced from one another, that said four wheels (30, 40, 50, 60) form part of said shaft means, with said third wheel (50) being disposed in the spacing between the first end portion (20a) and the central portion (20c) of the shaft means (20), the fourth wheel (60) being disposed in the spacing between the second end portion (20b) and the central portion (20c) of the shaft means (20) and the first and the second wheels (30, 40) being disposed at the oppositely facing ends of the first and second end portions (20a, 20b), respectively, of the shaft means (20), and that a tie rod (16) extends through the four wheels (30, 40, 50, 60) and shaft portions (20a, 20b, 20c) to axially clamp the four wheels and shaft portions together to form one integral wheel and shaft assembly.

7. An air cycle machine according to claim 6, characterized in that the first end portion (20a) of the third wheel (50) and the central shaft portion (20c) are interconnected by means of a pilot bushing (18) which also serves to center the entire wheel and shaft assembly on the tie rod (16).

## Patentansprüche

1. Luftkreislaufmaschine zum Klimatisieren von Luft zur Zufuhr in einen geschlossenen Raum, mit:
a. einer Welleneinrichtung (20), die zur Drehung um eine sich longitudinal erstreckende Achse (12) angeordnet ist;
b. einer Lagereinrichtung zum Lagern der Welleneinrichtung (20) zur Drehung um die Achse (12);
c. einem ersten Rad (30), das an einem ersten Endteil (20a) der Welleneinrichtung (20) zur Drehung mit derselben angebracht ist,
d. einem zweiten Rad (40), das an einem zweiten Endteil (20b) der Welleneinrichtung (20) zur Drehung mit derselben angebracht ist;
e. einem dritten Rad (50), das an einem mittigen Teil (20c) der Welleneinrichtung (20) mit Abstand von dem ersten Rad (30) und von dem zweiten Rad (40) zur Drehung mit der Welleneinrichtung (20) angebracht ist; und
f. einem vierten Rad (60), das an einem mittigen Teil (20c) der Welleneinrichtung (20) zwischen dem zweiten Rad (40) und dem dritten Rad (50) zur Drehung mit der Welleneinrichtung (20) angebracht ist, wobei von dem dritten und vierten Rad (50, 60), die mittig angeordnet sind, eines einen Kompressorrotor (60) bildet, der dazu dient, die Klimatisierungsluft, die durch ihn hindurchgeht, zu komprimieren, und wobei von dem dritten und vierten Rad (50,60), die mittig angeordnet sind, das andere einen Turbinenrotor (50) aufweist, der dazu dient, die Klimatisierungsluft zu entspannen, die durch ihn hindurchgeht, um dadurch die entspannte Klimatisierungsluft zu kühlen und ihr Energie zum Drehantreiben der Welleneinrichtung (20) um die Achse (12) zu entnehmen,
dadurch gekennzeichnet, daß das dritte und vierte Rad (50, 60) Rücken an Rücken auf entgegengesetzten Seiten einer mittigen Scheibe (14) zwischen sich angebracht sind, wobei die mittige Scheibe (14) aus einem wärmeisolierendem Material besteht, und daß die Lagereinrichtung nur zwei Gleitlager aufweist, nämlich:
a. eine erste Gleitlagereinrichtung (70) zum Lagern der Welleneinrichtung (20) zur Drehung um die Achse (12), wobei die erste Lagereinrichtung (70) zwischen dem ersten Rad (30) und dem dritten Rad (50) angeordnet ist; und
b. eine zweite Gleitlagereinrichtung (80) zum Lagern der Welleneinrichtung (20) zur Drehung um die Achse (12), wobei die zweite Lagereinrichtung (80) zwischen dem zweiten Rad (40) und dem vierten Rad (60) angeordnet ist.

2. Luftkreislaufmaschine nach Anspruch 1, dadurch gekennzeichnet, daß das erste und das zweite Rad (30, 40) jeweils einen Ventilatorrotor aufweisen.

3. Luftkreislaufmaschine nach Anspruch 1, dadurch gekennzeichnet, daß von dem ersten und zweiten Rad (30, 40) eines einen Ventilatorrotor bildet und daß von dem ersten und zweiten Rad (30, 40) das andere einen zweiten Turbinenrotor bildet.

4. Luftkreislaufmaschine nach Anspruch 1, dadurch gekennzeichnet, daß das vierte Rad (60) einen Kompressorrotor bildet, der dazu dient, die durch ihn hindurchgehende Klimatisierungsluft zu komprimieren, wobei das dritte Rad (50) einen Erststufenturbinenrotor bildet, der dazu dient, die komprimierte Klimatisierungsluft zu entspannen und dadurch die entspannte Klimatisierungsluft zu kühlen und ihr Energie zum Drehantreiben der Welleneinrichtung (20) um die Achse (12) zu entnehmen, wobei das erste Rad (30) einen Zweitstufenturbinenrotor bildet, der dazu dient, die komprimierte Klimatisierungsluft weiter zu entspannen und die entspannte Klimatisierungsluft dadurch weiter zu kühlen und ihr weitere Energie zum Drehantrieb der Welleneinrichtung (20) um die Achse (12) zu entnehmen, und wobei das zweite Rad (40) einen Ventilatorrotor bildet.

5. Luftkreislaufmaschine nach einem der Ansprüche 1 bis 4, gekennzeichnet durch ein Gehäuse (100), das um die Welleneinrichtung (20) und um das erste, zweite, dritte und vierte Rad (30, 40, 50, 60), die an der Welleneinrichtung (20) angebracht sind, angeordnet ist und die Lagereinrichtung (70,80) trägt, wobei das Gehäuse (100) einen mittigen Abschnitt (110) hat, der das dritte Rad (50) umgibt und einen Einlaßkanal (152) in dasselbe und einen Auslaßkanal (154) aus demselben, einen ersten Endabschnitt (120), der das erste Rad (30) umgibt und einen Einlaßkanal (132) in denselben und einen Auslaßkanal (134) aus demselben bildet, und einen zweiten Endabschnitt (130), der das zweite und vierte Rad (40, 60) umgibt und einen Einlaßkanal (162) zu dem vierten Rad (60) bildet, einen Einlaßkanal (142) zu dem zweiten Rad (40), einen Auslaßkanal (144) aus dem zweiten Rad (40) und einen Auslaßkanal (164) aus dem vierten Rad (60), wobei der mittige Abschnitt (110) die erste Gleitlagereinrichtung (70) trägt und wobei der zweite Endabschnitt (130) die zweite Gleitlagereinrichtung (80) trägt.

6. Luftkreislaufmaschine nach einem der Ansprüche 1 bis 5, dadurch gekennzeichnet, daß der erste und zweite Endteil (20a, 20b) und der mittige Teil (20c) der Welleneinrichtung (20) separate Wellenteile sind, die von einander axial beabstandet sind, daß die vier Räder (30, 40, 50, 60) einen Teil der Welleneinrichtung bilden, wobei das dritte Rad (50) in dem Zwischenraum zwischen dem ersten Endteil (20a) und dem mittigen Teil (20c) der Welleneinrichtung (20) angeordnet ist, wobei das vierte Rad (60) in dem Zwischenraum zwischen dem zweiten Endteil (20b) und dem mittigen Teil (20c) der Welleneinrichtung (20) angeordnet ist und wobei das erste und zweite Rad (30, 40) an den in entgegengesetzte Richtungen gewandten Enden des ersten bzw. zweiten Endteils (20a, 20b) der Welleneinrichtung (20) angeordnet sind, und daß sich eine Zugstange (16) durch die vier Räder (30, 40, 50, 60) und die Wellenteile (20a, 20b, 20c) erstreckt, um die vier Räder und die Wellenteile axial zusammenzuspannen, um eine integrale Räder- und Wellenbaugruppe zu bilden.

7. Luftkreislaufmaschine nach Anspruch 6, dadurch gekennzeichnet, daß der erste Endteil (20a) des dritten Rades (50) und der mittige Wellenteil (20c) mittels einer Paßbüchse (18) miteinander verbunden sind, die dazu dient, die gesamte Räder- und Wellenbaugruppe auf der Zugstange (16) zu zentrieren.

## Revendications

1. Machine frigorifique à air pour le conditionnement d'air destiné à alimenter une enceinte comprenant :
(a) un arbre (20) monté à rotation autour d'un axe (12) s'étendant longitudinalement;
(b) des moyens formant palier pour supporter l'arbre (20) en rotation autour de l'axe (12);
(c) une première roue (30) montée sur une première portion extrême (20a) de l'arbre (20) de manière à tourner conjointement avec celui-ci;
(d) une seconde roue (40) montée sur une seconde portion extrême (20b) de l'arbre (20) de manière à tourner conjointement avec celui-ci;
(e) une troisième roue (50) montée sur une portion centrale (20c) de l'arbre (20) en étant espacée de la première roue (30) et de la seconde roue (40) et tournant conjointement avec l'arbre (20); et
(f) une quatrième roue (60) montée sur une portion centrale (20c) de l'arbre (20), entre la seconde roue (40) et la troisième roue (50), de manière à tourner conjointement avec l'arbre (20), l'une des troisième et quatrième roues (50,60) disposées centralement constituant un rotor de compresseur (60) intervenant pour comprimer l'air de conditionnement passant à travers lui tandis que l'autre des troisième et quatrième roues (50,60) disposées centralement constitue un rotor de turbine (50) intervenant pour détendre l'air de conditionnement passant à travers lui, afin de refroidir l'air de conditionnement détendu et d'extraire de l'énergie à partir de celui-ci pour entraîner l'arbre (20) en rotation autour de l'axe (12),
caractérisée en ce que les troisième et quatrième roues (50,60) sont montées dos à dos sur les côtés opposés d'un disque central (14) situé entre elles, ce disque central (14) étant réalisé en un matériau isolant thermiquement, et en ce que les moyens formant palier comprennent seulement deux coussinets à savoir :
(a) un premier coussinet (70) pour supporter l'arbre (20) à rotation autour de l'axe (12), ce premier coussinet (70) étant disposé entre la première roue (30) et la troisième roue (50); et
(b) un second coussinet (80) pour supporter l'arbre (20) à rotation autour de l'axe (12), ce second coussinet (80) étant disposé entre la seconde roue (40) et la quatrième roue (60).

2. Machine frigorifique à air suivant la revendication 1 caractérisée en ce que chacune des première et seconde roues (30,40) est constituée par un rotor de ventilateur.

3. Machine frigorifique à air suivant la revendication 1 caractérisée en ce que l'une des première et seconde roues (30,40) est constituée par un rotor de ventilateur tandis que l'autre des première et seconde roues (30,40) est constituée par un second rotor de turbine.

4. Machine frigorifique à air suivant la revendication 1 caractérisée en ce que la quatrième roue (60) constitue un rotor de compresseur intervenant pour comprimer l'air de conditionnement passant à travers lui, la troisième roue (50) constitue un rotor de turbine d'un premier étage intervenant pour détendre l'air de conditionnement comprimé afin de refroidir ainsi l'air de conditionnement détendu et d'extraire de l'énergie à partir de celui-ci pour entraîner l'arbre (20) en rotation autour de l'axe (12), la première roue (30) constitue un rotor de turbine d'un second étage intervenant pour détendre additionnellement l'air de conditionnement comprimé afin de refroidir additionnellement l'air de conditionnement détendu et d'extraire additionnellement de l'énergie à partir de cet air pour entraîner l'arbre (20) en rotation autour de l'axe (12), et la seconde roue (40) constitue un rotor de ventilateur.

5. Machine frigorifique à air suivant l'une quelconque des revendications 1 à 4 caractérisée en ce qu'elle comprend un carter (100) disposé autour de l'arbre (20) et des première, seconde, troisième et quatrième roues (30,40,50,60) montées sur l'arbre (20) et supportant les moyens formant palier (70,80), ce carter (100) comportant une section centrale (110) entourant la troisième roue (50) et définissant un conduit d'entrée (152) en direction de cette roue et un conduit de sortie (154) en provenance de cette roue, une première section extrême (120) entourant la première roue (30) et définissant un conduit d'entrée (132) en direction de cette roue et un conduit de sortie (134) en provenance de cette roue, et une seconde section extrême (130) entourant les seconde et quatrième roues (40,60) et définissant un conduit d'entrée (162) en direction de la quatrième roue (60), un conduit d'entrée (142) en direction de la seconde roue (40), un conduit de sortie (144) en provenance de la seconde roue (40) et un conduit de sortie (164) en provenance de la quatrième roue (60), la section centrale (110) supportant le premier coussinet (70) et la seconde section extrême (130) supportant le second coussinet (80).

6. Machine frigorifique à air suivant l'une quelconque des revendications 1 à 5 caractérisée en ce que les première et seconde portions extrêmes (20a,20b) et la portion centrale (20c) de l'arbre (20) sont des portions d'arbre séparées, espacées axialement les unes des autres, en ce que les quatre roues (30,40,50,60) font partie intégrale de l'arbre, la troisième roue (50) étant disposée dans l'espace entre la première portion extrême (20a) et la portion centrale (20c) de l'arbre (20), la quatrième roue (60) étant disposée dans l'espace entre la seconde portion extrême (20b) et la portion centrale (20c) de l'arbre (20) et les première et seconde roues (30,40) étant disposées respectivement à l'endroit des extrémités, opposées l'une à l'autre, des première et seconde portions extrêmes de l'arbre (20), et en ce qu'une tige formant tirant (16) s'étend à travers les quatre roues (30,40,50,60) et les portions d'arbre (20a,20b,20c) afin de serrer axialement ensemble les quatre roues et les portions d'arbre pour constituer un ensemble intégral d'arbre et de roues.

7. Machine frigorifique à air suivant la revendication 6 caractérisée en ce que la première portion extrême (20a) de la troisième roue (50) et la portion d'arbre centrale (20c) sont interconnectées au moyen d'une douille pilote (18) qui sert également à centrer la totalité de l'ensemble d'arbre et de roues sur la tige formant tirant (16).
